Europäisches Patentamt

European Patent Office

Office européen des brevets

(11) Publication number: **0 124 280**
**B1**

# EUROPEAN PATENT SPECIFICATION

(45) Date of publication of patent specification: **24.05.89**

(51) Int. Cl.⁴: **H 04 N 9/64**

(21) Application number: **84302199.9**

(22) Date of filing: **30.03.84**

(54) **Method and apparatus for the extraction of luminance information from a video signal.**

(30) Priority: **04.04.83 US 482118**

(43) Date of publication of application:
**07.11.84 Bulletin 84/45**

(45) Publication of the grant of the patent:
**24.05.89 Bulletin 89/21**

(84) Designated Contracting States:
**CH DE FR GB LI NL**

(56) References cited:
**GB-A-2 079 091**
**IEEE TRANSACTIONS ON COMMUNICATIONS,**
**vol. COM-27, no. 10, October 1979, pages**
**1624-1631, IEEE; L.STENGER: "Digital comb-**
**filter demodulation of PAL color-television**
**signals"**
**PATENT ABSTRACTS OF JAPAN, vol. 6, no. 264**
**(E-150)1142r, 23rd December 1982; & JP-A-57**
**160 284 (SONY K.K.) 02-10-1982**

(73) Proprietor: **AMPEX CORPORATION**
**401 Broadway M.S. 3-35**
**Redwood City California 94063-3199 (US)**

(72) Inventor: **Beaulier, Daniel A.**
**324 Yale Road**
**Menlo Park California (US)**

(74) Representative: **Horton, Andrew Robert Grant**
**et al**
**BOWLES HORTON Castle House 89 High Street**
**Berkhamsted Hertfordshire HP 4 2DF (GB)**

Courier Press, Leamington Spa, England.

## Description

BACKGROUND OF THE INVENTION

This invention relates in general to signal processing with reference to a composite video signal, and more particularly to the extraction of luminance information from a video signal on which color information has been encoded.

A broad range of signal processing is frequently performed on video signals upon which color information has been encoded. This includes not only the storing and subsequent retrieval of the video information from a wide variety of media, including magnetic tape, disk, and semiconductor memory devices, but also real time algorithmic type processing including color correction and noise reduction. In connection with such signal processing, it is frequently desirable to reduce the video information contained in the composite video signal into its respective component forms, and thereafter perform the desired processing upon the respective components.

Basically speaking, a television picture is composed of a plurality of horizontal lines, each line containing color and brightness information for the respective portions along its length. The total number of said horizontal lines are further subdivided into two groups, or fields in such a manner that the respective lines of each field vertically interlace to form a single picture, or frame. The signal information for each location along each of said horizontal line is encoded in a single electronic signal commonly referred to as a composite video signal. The composite video signal contains both color as well as black and white information. The average DC level of said composite signal with reference to a horizontal line generally represents the corresponding black and white brightness information. Color information is contained on a 3.58 MHz subcarrier signal which is superimposed on said DC level. In particular, the amplitude of said subcarrier contains color saturation information, and the phase angle of said subcarrier with reference to a reference subcarrier contains the respective color information. As color information is phase encoded on the 3.58 MHz subcarrier, a 3.58 MHz reference signal is transmitted with each line of video information for reference purposes. The DC level of said video signal is generally referred to as containing the luminance information, and the 3.58 MHz subcarrier is generally referred to as containing the chominance information.

From a mathematical standpoint, the encoded color information present in the chrominance signal can be represented as a vector having a magnitude proportional to the amplitude of said subcarrier and a phase angle proportional to the phase of said 3.58 MHz signal relative to said reference signal.

In considering a composite video signal with reference to the frequency domain, the luminance signal would be composed of frequency components up to approximately 4.5 MHz. As chrominance information is contained on the 3.58 MHz subcarrier, it is clear that most chrominance frequency information will be centered about 3.58 MHz. From the foregoing it is apparent that chrominance information is present within the same frequency spectrum as luminance information.

In the processing of video signals, it is frequently desirable to extract the luminance and chrominance signal components from the composite video signal. Thereafter signal processing can be performed upon the luminance and chrominance signal components directly, from which the composite video signal can be subsequently reconstructed.

In dealing with the chrominance information, while said information is present in the amplitude and phase relations of the 3.58 MHz subcarrier, it is generally not convenient to perform the desired processing upon the chominance information in this form. Rather it is preferable to obtain chrominance information in its respective component form, i.e., the R-Y and B-Y components.

Several techniques are commonly used to extract chominance and luminance information from a composite video signal. In a first approach, a composite video signal is supplied to a bandpass filter having a center frequency of 3.58 MHz. The output from said bandpass filter will consequently contain primarily chrominance information. Luminance information can be thereafter derived by subtracting the output of the bandpass filter, i.e., the chrominance, from the composite video signal, thereby yielding the luminance signal. The respective R-Y and B-Y components are thereafter derived from the chrominance signal by a demodulation process. In particular, as the R-Y and B-Y signals represent the orthogonal components of the chrominance signal, said components are generally derived by multiplying the chrominance signal by a second signal. The R-Y component is generally derived by multiplying the said chrominance signal by a first reference signal having a frequency of 3.58 MHz. The resultant signal from said multiplication process is thereafter supplied to a low pass filter the output of which represents the corresponding R-Y orthogonal component in an analog format. In a similar fashion, the B-Y orthogonal component of chrominance is derived by multiplying the chrominance signal by a second reference signal having a frequency of 3.58 MHz and a phase difference from said first reference signal of 90°. Thereafter the result of said second multiplication process is supplied to a low pass filter, the output of which is an analog signal representative of the B-Y orthogonal component of the chrominance signal.

While the above approach will produce a luminance signal as well as the respective orthogonal components of the chrominance signal, there are a number of short-comings. In particular, due to the fact that the luminance signal can have components in the frequency spectrum occupied by the chrominance signal, the bandpass filter employed in the above approach has limited abilities to effectively separate the luminance signal from the chrominance signal. Consequently luminance signal components are frequently present in the R-Y and B-Y output from the demodulation process.

An improved approach over the single bandpass system above described employs the operation of a comb filter. In particular the output from the bandpass filter is thereafter supplied as an input to a comb filter. The output from the comb filter represents the desired chrominance signal which is subsequently used for subtraction from the composite signal to generate a luminance signal, as well as the chrominance input for the demodulation process.

A comb filter may be implemented by taking advantage of certain phase relationships present in the 3.58 MHz subcarrier between subsequent lines, fields and frames in a composite video signal generated in accordance with the National Television System Committee standard RS-170A as promulgated by the Electronic Industries Association, or the Phase Alternating Line standard, hereinafter referred to as NTSC and PAL respectively.

In a composite video signal, the phase relation of 3.58 MHz subcarrier will change between subsequent lines in a field, as well as adjacent lines in adjacent fields. In particular there is a 180° phase shift of the 3.58 MHz subcarrier between corresponding points on adjacent lines within the same field in a composite video signal generated according to the NTSC standard, and a 90° phase shift between corresponding points on adjacent lines within the same field in a composite video signal generated according to the PAL standard. It is also observed that a 180° phase shift exists between corresponding points on adjacent lines between two fields in a video signal produced according to both the NTSC and PAL standard. This phase shift can be used to advantage in the extraction of chrominance information from a composite video signal.

In the foregoing approach employing a bandpass filter to produce a chrominance signal, by supplying the output from said bandpass filter to a delay means capable of delaying said chrominance signal by an amount equal in time to one horizontal line in the NTSC system, or two horizontal lines in the PAL system and thereafter subtracting the results from the output from the bandpass filter, the result of said process will be a signal from which luminance components have been removed and chrominance components present therein will have been doubled. This signal can then be used as an input to the demodulator for subsequent production of the R-Y and B-Y orthogonal components of the chrominance signal, as well as subtracted from the composite video signal produce a luminance signal.

While this approach can be used to produce performance superior to that achievable with the use of a bandpass filter alone, a number of shortcomings nevertheless remain. These shortcomings generally relate to the point in the video signal at which said 180° phase shift occurs. In the NTSC system, the point at which a 180° phase shift has occurred is available at the corresponding point in either the subsequent line in the same field, or the corresponding point on the adjacent line in the next succeeding field. In this regard it will be particularly observed that the amount of change in luminance between subsequent lines in the same field and adjacent lines in a subsequent field can vary considerably. This problem is further compounded in the PAL system wherein the phase shift between corresponding points on subsequent lines in a single field is 90°. Consequently the amount of delay necessary for the video signal in the PAL system required for a 180° phase reversal is two horizontal lines within a field. Clearly the amount of change in luminance possible between two horizontal lines in the PAL system further compounds the problem. In the NTSC and PAL systems, however, there is a 180° phase shift between corresponding points on adjacent lines between adjacent fields. Consequently by delaying the chrominance signal by an amount in time equal to one field, the necessary 180° phase shift is possible with a minimum change in luminance in both the NTSC and PAL systems. However, this approach requires storing a substantial amount of video information, as the required delay is 262 or 312 lines in the NTSC and PAL systems respectively.

In the past, the storage of a complete field of video information has been achieved by digitizing the composite video signal and storing the results therefrom in a storage device. This storage device is commonly a semiconductor memory device. It will however be noted in this approach that as the composite video signal was initially digitized in the composite form, subsequent operations performed thereon necessarily must be performed in the digital domain. In particular, the mathematical operation of substracting the digitized form of the component composite video information from the digitized video composite signal stored in the storage means to produce a chrominance signal, as well as the implementation of the subsequent bandpass filter must be performed in the digital domain. The digital results of the signal subsequent to the bandpass filter would represent chrominance information which could thereafter be subtracted from the digitized composite video signal to produce a signal representative of chrominance. However, the R-Y and B-Y orthogonal components of the chrominance signal must still be extracted from the digitized chrominance signal. As this necessarily requires a multiplication process, implementation of same in the digital domain is particularly complex and requires extensive hardware. Efforts in this area are documented in Croll, M.G. 1980, A Digital Storage System for an Electronic Colour Rostrum Camera, IEE Conference Publication No. 191,252-255, and Clarke, C.K.P. 1982, High Quality Decoding for PAL Inputs to Digital YUV Studieos, IEE Conference Publication No. 220, 363-366.

Consequently while it is observed that minimum changes in luminance will occur between subsequent lines on adjacent fields, implementation of this approach in the past has necessitated extensive amounts of hardware to perform the required digital signal processing.

## SUMMARY

In the present invention, the disadvantages and limitations present in prior art techniques for the extraction of luminance information employing the digitizing of the analog composite video signal for storage in a frame store, and the subsequent required implementation of a band-pass filter in the digital domain have been obviated.

GB-A-2079091 describes a PAL decoder in which luminance is extracted from a composite colour television signal composed of successive fields, wherein high frequency chrominance components exhibit a phase shift of 180° from field to field. The decoder comprises an analog processing section including a filter operable on the television signal in analog form to produce a first signal composed of high frequency components of the television signal. In GB-A-2079091 this first signal is produced by comparing a full bandwidth signal from one television field with a signal, consisting only of chrominance components, derived by comparing the average of two television fields immediately preceding and succeeding the aforementioned field with the full bandwidth television field signal, and passing the resultant through a band-pass filter. Two one field delays are necessary at the input of the decoder in order to make the three television signals from the respective field simultaneously available for comparison.

The present invention however is characterised in that the filter is also operable to produce a second signal composed of both high frequency components and low frequency components of the television signal and characterised further by means for converting the first and second signals to digitally coded form, means for introducing relative delay corresponding to the period of the field between the first and second signals and means for combining the said signals in their digitally coded form, the delay being applied such that the signals which are combined are derived from different fields, and the gains of high frequency components being the same for the first and second signals and half that of the low frequency components, whereby in the output of the summing means out of phase high frequency chrominance components mutually cancel and equalised high and low frequency luminance components are retained.

One particular embodiment of the invention develops the aforementioned first and second signals continuously. According to this form of the invention, apparatus for producing luminance information from an analog video signal composed of successive fields wherein some high frequency components are out of phase by 180° from field to field is characterised by filtering means responsive to the analog video signal for producing a first and second filtered signal so that the first filtered signal contains the low frequency components present in the analog video signal and the second filtered signal contains the low frequency components present in the analog video signal shifted in phase by 180°;

a first summing means responsive to the analog video signal and the first filtered signal for producing a first output signal equal to the difference between the analog video signal and the first filtered signal;

a second summing means responsive to the analog video signal and the second filtered signal for producing a second output signal equal to the difference between the analog video signal and the second filtered signal;

a first conversion means for producing a first digitized signal corresponding to the first output signal;

a second conversion means for producing a second digitized digital signal corresponding to the second output signal;

a digital delay means for delaying the second digitized signal by the period of one field;

and summing means for producing the luminance information as the sum of the first digitized signal and the delayed second digitized signal.

Another embodiment of the invention operates discontinuously so as to develop signals corresponding to the aforementioned first and second signals during different, adjacent fields of the television signal. This embodiment of the invention is characterised by switched filter means responsive to first and second television fields of the analog video signal for producing a filtered output signal which for one of the fields comprises only those frequency components present in the analog video signal above a selected frequency and comprises, for the other of the fields, (i) those frequency components present in the analog video signal above the selected frequency and exhibiting the same gain as the corresponding components in the filtered output for the first field, and (ii) those frequency components present in the analog signal below the selected frequency and exhibiting twice the said gain;

analog to digital conversion means responsive to the filtered output signal for producing the filtered output signal in a digital format;

delay and summing means ($S_o$) responsive to the filtered output signal for producing a digital summed output signal equal to the sum of the filtered output signal and the filtered output signal delayed in time by one television field, whereby the said out of phase high frequency components mutually cancel.

Another aspect of the invention concerns a method of extracting luminance information from a video signal which is in analog form and is composed of fields in which some of the high frequency components define non-luminance information and are out of phase by 180° from one field to another, the method including producing from the video signal by analog processing a first signal which consists of high frequency components of the video signal above a selective frequency. Such a method as thus far stated corresponds to the operation of the apparatus described in GB-A-2079091.

The method according to the invention is characterised by producing from the video signal by analog processing a second signal which comprises both high frequency components of the video signal and low frequency components, below the selected frequency, of the video signal; converting each of the first and second signals into digital form; combining the two digitised signals; and introducing relative delay between the first and second signals before they are combined so that the signals which are combined represent the video signal in adjacent fields whereby the said out of phase high frequency components mutually cancel.

In ordinary forms of the invention the said delay corresponds to one television field, the said filter is a low pass filter and the said network provides for the high frequency components a gain of half the gain of the low frequency components so that in the final output, high frequency chrominance components are cancelled but in-phase luminance components are retained together with the low frequency luminance components and equalisation of the high and low frequency components is inherently provided. Nevertheless, other arrangements are feasible.

In a preferred form of the present invention a field store is employed, to obtain the necessary 180° phase reversal from the non delayed video signal between adjacent lines in adjacent fields thereby minimizing the effects of changes in luminance. In particular the composite analog video signal may be supplied to a low pass filter having a cut off frequency below the 3.58 MHz subcarrier frequency. The output of the low pass filter may be supplied to an amplifier having differential outputs. The noninverting output from said amplifier may be supplied as a first input to a first summer. The composite analog video signal may be supplied as the second input to the first summer. The output from the first summer may be subsequently supplied as the input to a first analog to digital converter. The inverting output from said amplifier may be supplied as a first input to a second summer. The analog composite video signal may be supplied as a second input to the second summer. The output from the second summer may be supplied as an input to a second analog to digital converter. The output from the second analog to digital converter may be supplied as an input to a storage means which functions to store the digitized output from the second summer for one complete field. The output from said storage means may thereafter be supplied as a first input to a third summer. The output from said first analog to digital converter may be supplied as a second input to the third summer. The output from the third summer represents luminance information in a digital format. Consequently luminance information can be continuously extracted from a composite analog video signal.

In a particular embodiment of the present invention, luminance information may be separated from an analog composite video signal and digitized for storing on an individual field basis for use in an electronic storage system wherein a single frame of video information is stored. In this regard, an inverted video signal may be developed from the composite video signal. The inverted signal may be low pass filtered above a selected frequency in the band width of the composite signal during the first field. The color subcarrier frequency may be subtracted from the composite signal during the first field and is converted to a first digital signal. During the second field the noninverted video signal may be low pass filtered and this filtered signal may be subtracted from the composite signal and converted to a second digital signal. The first and second digital signals may be added to provide the luminance information of the composite video signal.

DESCRIPTION OF FIGURES

FIGURE 1 illustrates in a functional block form a method and apparatus for the extraction of luminance information from an analog composite video signal on a field basis in accordance with the present invention.

FIGURE 2 illustrates the frequency response of a portion of the circuit illustrated in FIGURE 1 with switch S1 in position A.

FIGURE 3 illustrates for frequency response of a portion of the circuit illustrated in FIGURE 1 with switch SI in position B.

FIGURE 4 illustrates in a functional block form a method and apparatus for the extraction of luminance information from an analog composite video signal on a continuous basis in accordance with the present invention.

DETAILED DESCRIPTION

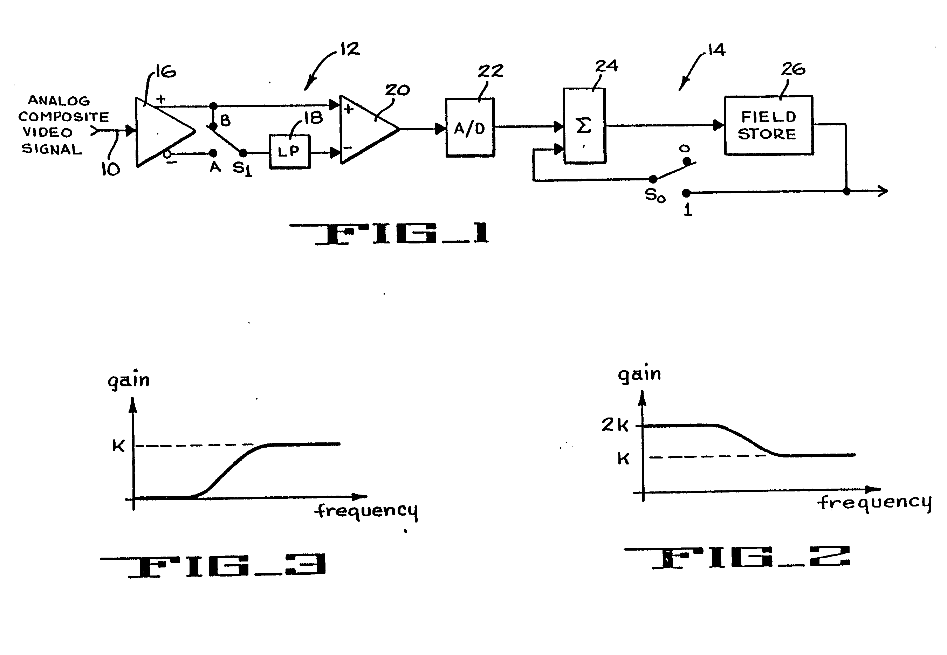

FIGURE 1 illustrates a source 10 of an analog composite video signal, an analog processing section 12 and a two-field comb filter 14 for the extraction of luminance information from an analog composite video signal in accordance with the present invention. Analog processing section 12 includes differential output amplifier 16, a switch S1, a lowpass filter 18, a differential input amplifier 20 and an analog to digital converter 22. Filter 14 includes a digital summer 24 and a digital field store 26.

Source 10 applies the analog composite video signal to differential output amplifier 16. Differential output amplifier 16 develops a non-inverted video signal at its non-inverting output and an inverted video signal at its inverting output. It is clear that the inverted video signal appearing at the inverting output from differential output amplifier 16 is the same signal as the non-inverted video signal which appears at the non-inverting video output of amplifier 16, only shifted in phase by 180°. The non-inverted signal is applied to the non-inverting input of differential input amplifier 16 and to a pole B of switch S1. The inverted signal is applied to a pole A of switch SI. Switch SI selectively switches the signal occurring at either pole A or B for application to a low pass filter 18. Low pass filter 18 attenuates the signals applied thereto above a selected frequency, the selected frequency being less than the frequency of the color subcarrier of the composite video signal. The attenuated signal developed by low pass filter 18 is applied to the inverting input of differential input amplifier 20. Differential input amplifier 20 subtracts the signal occurring at its inverting input from the signal applied to its non-inverting input and develops a subtracted signal. The subtracted signal is applied to analog to digital converter 22. Analog to digital converter 22 converts the subtracted signal into a digital signal. The digital signal is applied to a first input of digital summer 24. The output of digital summer 24 is coupled to an input of field store 26. The output of field store 26 is coupled to a second input of digital summer 24.

The chroma separation process requires two fields to complete. During the first field, switch S1 is placed in position A, switch S0 is placed in position 0.

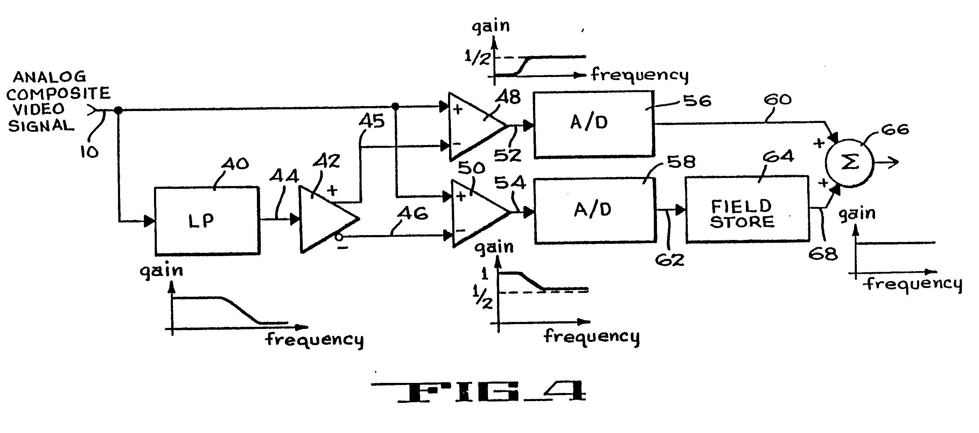

Placing S1 in position A will filter the analog video signal producing an output from analog processing section 12 according to the transfer function K(1 + LP (s)), where LP(s) is the response of lowpass filter 18, and where K includes any gain factors of amplifier 16 and 20. For low frequencies, LP(s) = 1, producing a gain of 2K. For frequencies above the cutoff frequency of lowpass filter 18, LP(s) = 0, producing a gain of K. This is shown symbolically in FIGURE 2. Signal components near subcarrier will be subjected to a gain of K, while low frequency luminance components will be subjected to a gain of 2K.

The filtered analog signal is thereafter converted to a digital form by analog to digital converter 22 and stored in field store 26. At the end of the first field, switch S1 is placed in position B, switch So is placed in Position 1.

Placing S1 in position B will filter the analog video signal according to the transfer function K(1-LP(s). For the low frequencies, LP(s) = 1, producing a gain of 0; for frequencies above the cutoff frequency of filter 18, LP(s) = 0, producing a gain of K. This is shown symbolically in FIGURE 3. Signal components near subcarrier will again be subjected to a gain of K, but low frequency luminance components will be blocked.

Adder 24 will combine the filtered digitized signal of field 2 with the data being output from field store 134. As noted earlier, luminance information tends to repeat in phase from field to field. For any such signal, the net transfer function at the output of adder 132 would be the sum of the individual transfer functions realized by analog processing section 12 during the two fields. In particular this would be K(1 + LP(s)) + K(1 LP(s) = 2K. This illustrates that all information which is in phase from field to field will be subjected to a uniform gain.

As noted earlier, subcarrier information reverses phase from field to field. It is also possible for luminance information to change phase from field to field. The transfer function for any signal which changes phase from field to field is the difference of the above two transfer functions, K(1 + LP(s)) - K1 - LP(s)) = 2K(LP(s)). This illustrates that information which changes phase from field to field is not passed in the same manner as information which is field coherent, but instead is lowpass filtered.

Thus the net effect of the process is to remove from the composite signal only the high frequency components which change from field to field; that includes chroma information. In-phase high frequency components and all low frequency components regardless of phasing, pass with the identical gain of 2K.

The output of adder 24 is rewritten into field store 26 until the end of the second field, at which time field store 26 will contain chroma free data suitable for recording or other purposes.

It will be observed that the above approach is insensitive to small variations in analog parameters. In particular small changes in response to the pass band in the low pass filter will effect only diagonal luminance components. In a similar manner imbalance in the differential gains present with reference to amplifier 16 and 20 will only cause small differences in gain between in phase and diagonal luminance information. As the desired separation requires only that the low pass filter have a response near zero at the subcarrier frequency, it is clear that the foregoing practical limitations have minimal effect.

It is likewise observed from the foregoing that as the low pass filter 18 as well as signal processing elements consisting of amplifiers 16 and 20 operate in the analog domain, and are present in the analog signal processing prior to the conversion to the digital domain, it is not necessary in the present invention to implement the functions of the low pass filter in the digital domain. This results in significant simplification of the required signal processing.

The principles of the present invention can be further extended to the extraction of luminance information from a composite analog signal on a continuous rather than a field basis. A functional block diagram of such a device incorporating the present invention as illustrated in FIGURE 4.

Referring to FIGURE 4 composite video signal 10 is applied to low pass filter 40 and as a first input to differential amplifier 42. Low pass filter 40 functions to pass frequencies below the frequency of the 3.54 MHz subcarrier in output signal 44. Output signal 44 from low pass filter 40 is supplied as an input to amplifier 42. Amplifier 42 produces a differential output signal having a non-inverting output 44 and an inverting output 46. The non-inverting output 46 from amplifier 44 is applied as a second input to differential amplifier 48. The inverting output from amplifier 42 is supplied as a second input to differential amplifier 50. The composite video signal 10 is supplied as a first input to differential amplifier 50. Differential amplifier 48 and 50 function to produce output signals 52 and 54 respectively equal to the sum of input signals 10 and 44 and 10 and 46 respectively. The output 52 from differential amplifier 48 is thereafter supplied as an input to the first analog to digital converter 56. The output 54 from differential amplifier 50 is supplied as an input to second analog to digital converter 58. Analog to digital converters 56 and 58 function to convert their respective analog input signals 52 and 54 respectively to the corresponding digital representation 60 and 62 respectively. The output 62 from analog to digital converter 58 is supplied as an input to field store means 64. Field store means 64 functions to store the digital input 62 thereto. Field store means 64 may be implemented in numerous manners including semiconductor memories. Field store 64 functions to store the digital representation of the analog signal 54 for a total 312 lines of video information according to the PAL video standard, or 262 lines of video information according to the NTSC vieo standard. The output signal 60 from first analog to digital converter 56 is supplied as a first input to summing means 66. The output 68 from field store means 64 is supplied to a second input to summing means 66. Summing means 66 fuctions to perform the addition in a digital format of the respective inputs thereto producing an output signal 68 equal to the sum of the respective input signals thereto. The output signal 68 represents luminance information in a digital format.

The above described method and apparatus to extract luminance information from a composite video signal operates as follows.

The output of differential amplifiers 48 and 50 will consist of analog video filtered information according to the functions K(1 - LP(s)) and K (1 + LP(s)) respectively. After digitization the output of differential amplifier 50 is delayed by one field (specifically 262 lines for NTSC and 314 lines for PAL) and added to the digitized output of differential amplifier 48 by means of adder 66.

It is clear that the result of this addition is identical to that of the previous discussions, specifically that field coherent information is passed with a gain of 2K while information which reverses phase from field to field is low pass filtered according to the function 2K (LP(S)). The distinction between the implementation of FIGURE 1 and FIGURE 4 is that the implementation of FIGURE 4 results in a continuous process whereas that of FIGURE 1 does not. Thus the implementation of FIGURE 1 is suitable primarily for freezing action at some point in time, whereas the implementation of FIGURE 4 would be suitable for decoding of normal real time television images on a continuous basis.

## Claims

1. Apparatus for extracting luminance information from a composite color television signal composed of successive fields wherein high frequency chrominance components exhibit a phase shift of 180° from field to field, comprising an analog processing section (12 or 40-50), including a filter (18 or 40), operable on the television signal in analog form to produce a first signal composed of high frequency components of the television signal, characterised in that the filter is also operable to produce a second signal composed of both high frequency components and low frequency components of the television signal, and characterised further by means (22 or 56, 58) for converting the first and second signals to digitally coded form, means (26 or 64) for introducing relative delay corresponding to the period of a field between the first and second signals and means (24 or 66) for combining the said signals in their digitally coded form, the delay being applied such that the signals which are combined are derived from different fields, and the gains of the high frequency components being the same for the first and second signals and half that of the low frequency components, whereby in the output of the summing means out of phase high frequency chrominance components mutually cancel and equalized high and low frequency luminance components are retained.

2. Apparatus according to claim 1 wherein the filter is a low pass filter (18 or 40) arranged to receive the analog television signal and the said section includes means for effectively comparing and combining the output of the filter with the analog television signal to produce the said first and second signals.

3. Apparatus according to claim 1 or claim 2 wherein the said section is arranged to provide the said first and second signals continuously in respective channels each of which includes an analog-to-digital converter (56, 58).

4. Apparatus according to claim 3 in which one of said channels includes a field store (64) to provide the said delay.

5. Apparatus according to any of claims 1 to 4 in which the said section is arranged to develop the first and second signals consecutively, the means for introducing delay (26) being arranged for storing one of said first and second signals during a first field period and the means for combining (S₀, 24) being operable to add the other one of said first and second signals to the stored signal during a second field period.

6. Apparatus according to claim 5 wherein the said section comprises a difference amplifier (20) arranged to receive the analog television signal and the output of a low pass filter (18) constituting the said filter, the low pass filter being arranged switchably to receive during consecutive field periods the analog television signal and an inverted form thereof respectively.

7. Apparatus for producing luminance information from an analog video signal composed of successive fields wherein some high frequency components are out of phase by 180° from field to field, characterised by:

filtering means (40, 42) responsive to the analog video signal for producing a first and second filtered signal so that the first filtered signal (45) contains the low frequency components present in the analog video signal and the second filtered signal (46) contains the low frequency components present in the analog video signal shifted in phase by 180°.

a first summing means (48) responsive to the analog video signal and the first filtered signal for producing a first output signal (52) equal to the difference between the analog video signal and the first filtered signal;

a second summing means (50) responsive to the analog video signal and the second filtered signal for producing a second output signal (54) equal to the difference between the analog video signal and the second filtered signal;

a first conversion means (56) for producing a first digitized signal (60) corresponding to the first output signal;

a second conversion means (58, 64) for producing a second digitized digital signal (62) corresponding to the second output signal;

a digital delay means (64) for delaying the second digitized signal by the period of one field; and

summing means (66) for producing the luminance information as the sum of the first digitized signal (60) and the delayed second digitized signal (68).

8. Apparatus according to claim 7 wherein the filtering means comprises:

a low pass filter (40) responsive to the analog video signal for producing an output filtered signal (44); and

amplifier means (42) responsive to the output filtered signal for producing the first filtered signal corresponding to the said output filtered signal and the second filtered signal shifted in phase by 180° relative to the first filtered signal.

9. Apparatus according to claim 7 or claim 8 wherein the digital delay means (64) comprises a field store.

10. Apparatus for producing luminance information from two adjacent television fields of analog video signal composed of a plurality of frequency components including high frequency components which are out of phase by 180° from one field to the other, characterised by:

filter means (16, $S_1$, 18, 20) responsive to the first and second television fields of the analog video signal for producing a filtered output signal which for one of the fields comprises only those frequency components present in the analog video signal above a selected frequency, and comprises, for the other of the fields, (i) those frequency components present in the analog video signal above the selected frequency and exhibiting the same gain as the corresponding components in the filtered output for the first field, and (ii) those frequency components present in the analog signal below the selected frequency and exhibiting twice the said gain;

analog to digital conversion means (22) responsive to the filtered output signal for producing the filtered output signal in a digital format;

delay and summing means ($S_0$, 24, 26) responsive to the filtered output signal for producing a digital summed output signal equal to the sum of the filtered output signal and the filtered output signal delayed in time by one television field, whereby the said out of phase high frequency components mutually cancel.

11. A method of extracting luminance information from a video signal which is in analog form and is composed of fields in which some of the high frequency components define non-luminance information and are out of phase by 180° from one field to another, the method including producing from the video signal by analog processing a first signal which consists of high frequency components of the video signal above a selected frequency;

characterised by:

producing from the video signal by analog processing a second signal which comprises both high frequency components of the video signal and low frequency components, below the selected frequency, of the video signal;

converting each of the first and second signals into digital form;

combining the two digitized signals; and

introducing relative delay between the first and second signals before they are combined so that the signals which are combined represent the video signal in adjacent fields whereby the said out of phase high frequency components mutually cancel.

12. A method according to claim 11 in which the gains of the various components are such that the high frequency components which reverse phase from field to field are substantially removed by the combination of the first and second signals whereas the low frequency components and those high frequency components which are phase coherent from field to field are passed out with identical gain.

13. A method according to claim 11 or claim 12 in which the first and second signals are produced in respect of different adjacent fields of the video signal and the delay is applied to render the two signals, in their digitized forms, simultaneously available for combination.

14. A method according to claim 11 or claim 12 in which the first and second signals are produced in respect of each field of the video signal and the delay corresponds to one field time.

15. A method according to claim 12 and claim 14 in which the first and second signals are produced by subjecting the video signal to lowpass filtering to obtain the said low frequency components, forming the difference between the low frequency components and the said video signal to provide the said first signal and forming the difference between the said video signal and a phase-inverted form of the low frequency components to provide the said second signal.

**Patentansprüche**

1. Schaltungsanordnung zur Abtrennung von Luminanzinformation aus einem zusammengesetzten Farbfernsehsignal, das sich aus aufeinanderfolgenden Halbbildern zusammensetzt und bei dem hochfrequente Chrominanzkomponten von Halbbild zu Halbbild einer Phasenverschiebung von 180° unterliegen, mit einem ein Filter (18 oder 40) enthaltenen Analogprozessorabschnitt (12 oder 40 bis 50), der auf das Fernsehsignal in analoger Form wirkt, um ein erstes Signal zu erzeugen, das sich aus hochfrequenten Komponenten des Fernsehsignals zusammensetzt, dadurch gekennzeichnet, daß das Filter weiterhin ein zweites Signal erzeugt, das sich sowohl aus hochfrequenten als auch niederfrequenten Komponenten des Fernsehsignals zusammensetzt, und daß Mittel (22 oder 56, 58) zur Umwandlung des ersten und zweiten Signals in digitalcodierte Form, Mittel (26 oder 64) zur Einführung einer Relativverzögerung entsprechend der Periode eines Halbbildes zwischen dem ersten und zweiten Signal sowie Mittel (24 oder 66) zur Kombination der Signale in ihrer digitalcodierten Form vorgesehen sind, wobei die Verzögerung so zur Einwirkung kommt, daß die der Kombination unterliegenden Signale aus unterschiedlichen Halbbildern abgeleitet werden, und wobei die Verstärkungen der hochfrequenten Komponenten für das erste Signal gleich und gleich der Hälfte der niederfrequenten Komponenten sind, wodurch sich nicht in Phase befindliche hochfrequente Chrominanzkomponenten im Ausgangssignal der Summationsmittel wechselseitig auslöschen und entzerrte hochfrequente und niederfrequente Luminanzkomponenten erhalten bleiben.

2. Schaltungsanordnung nach Anspruch 1, in der das Filter ein das analoge Fernsehsignal aufnehmendes Tiefpaßfilter (18 oder 40) ist und der Abschnitt Mittel zum effektiven Vergleichen und Kombinieren des Ausgangssignals des Filters mit dem analogen Fernsehsignal zwecks Erzeugung des ersten und zweiten Signals enthält.

3. Schaltungsanordnung nach Anspruch 1 oder 2, in welcher der Abschnitt so ausgebildet ist, daß das erste und zweite Signal kontinuierlich in entsprechenden Kanälen erzeugt werden, von denen jeder einen Analog-Digital-Umsetzer (56, 58) enthält.

4. Schaltungsanordnung nach Anspruch 3, in welcher die Kanäle einen Halbbildspeicher (74) zur Realisierung der Verzögerung enthalten.

5. Schaltungsanordnung nach den Ansprüchen 1 bis 4, in welcher der Abschnitt so ausgebildet ist, daß das erste und zweite Signal aufeinanderfolgend erzeugt werden, die Mittel (26) zur Einführung der Verzögerung zur Speicherung des ersten und zweiten Signals während einer ersten Halbbildperiode dienen und die Kombinationsmittel (S$_0$, 24) das andere Signal des ersten und zweiten Signals während einer zweiten Halbbildperiode dem gespeicherten Signal hinzuaddieren.

6. Schaltungsanordnung nach Anspruch 5, in welcher der Abschnitt einen das analoge Fernsehsignal und das Ausgangssignal des das Filter bildenden Tiefpaßfilters (18) aufnehmenden Differenzverstärker (20) umfaßt und in der das Tiefpaßfilter umschaltbar ausgebildet ist, um während aufeinanderfolgender Halbbildperioden das analoge Fernsehsignal und eine invertierte Form dieses Signals aufzunehmen.

7. Schaltungsanordnung zur Erzeugung von Luminanzinformation aus einem sich aufeinanderfolgenden Halbbildern zusammensetzenden analogen Videosignal, bei dem bestimmte Hochfrequenzkomponenten von Halbbild zu Halbbild eine Phasenverschiebung von 180° aufweisen, gekennzeichnet durch auf das analoge Videosignal ansprechende Filtermittel (40, 42) zur Erzeugung eines ersten und zweiten gefilterten Signals, derart, daß das erste gefilterte Signal (45) im analogen Videosignal vorhandene niederfrequente Komponenten und das zweite gefilterte Signal (46) im analogen Videosignal vorhandene, um 180° in der Phase verschobene niederfrequente Komponenten enthält;

erste auf das analoge Videosignal und das erste gefilterte Signal ansprechende Summationsmittel (48) zur Erzeugung eines ersten Ausgangssignals (52), das gleich der Differenz zwischen dem analogen Videosignal und dem ersten gefilterten Signal ist;

zweite auf das analoge Videosignal und das zweite gefilterte Signal ansprechende Summationsmittel (50) zur Erzeugung eines zweiten Ausgangssignals (54), das gleich der Differenz zwischen dem analogen Videosignal und dem zweiten gefilterten Signal ist;

erste Umsetzungsmittel (56) zur Erzeugung eines ersten digitalisierten Signals (60) entsprechend dem ersten Ausgangssignal;

zweite Umsetzungsmittel (58, 64) zur Erzeugung eines zweiten digitalisierten Signals (62) entsprechend dem zweiten Ausgangssignal;

digitale Verzögerungsmittel (64) zur Verzögerung des zweiten digitalisierten Signals um die Periode eines Halbbildes; und

Summationsmittel (66) zur Erzeugung der Luminanzinformation als Summe des ersten digitalisierten Signals (60) und des verzögerten zweiten digitalisierten Signals (68).

8. Schaltungsanordnung nach Anspruch 7, in welcher die Filtermittel folgende Komponenten aufweisen:

ein auf das analoge Videosignal ansprechendes Tiefpaßfilter (40) zur Erzeugung eines gefilterten Ausgangssignals (44); und

auf das gefilterte Ausgangssignal ansprechende Verstärkermittel (42) zur Erzeugung des ersten gefilterten Signals entsprechend dem gefilterten Ausgangssignal und des zweiten gefilterten Signals, das in Bezug auf das erste gefilterte Signal um 180° in der Phase verschoben ist.

9. Schaltungsanordnung nach Anspruch 7 oder 8, in welcher die digitalen Verzögerungsmittel (64) einen Halbbildspeicher umfassen.

10. Schaltungsanordnung zur Erzeugung von Luminanzinformation aus zwei benachbarten Fernsehhalbbildern eines analogen Videosignals, das sich aus einer Vielzahl von Frequenzkomponenten einschließlich hochfrequenten Komponenten, welche von Halbbild zu Halbbild um 180° in der Phase verschoben sind, zusammensetzt, gekennzeichnet durch auf das erste und zweite Fernsehhalbbild des analogen Videosignals ansprechende Filtermittel (16, $S_1$, 18, 20) zur Erzeugung eines gefilterten Ausgangssignals, das für eines der Halbbilder lediglich die im analogen Videosignal oberhalb einer ausgewählten Frequenz vorhandenen Frequenzkomponenten und für das andere der beiden Halbbilder (i) die im analogen Videosignal oberhalb der ausgewählten Frequenz enthaltenen und die gleiche Verstärkung wie die entsprechenden Komponenten im gefilterten Ausgangssignal für das erste Halbbild aufweisenden Frequenzkomponenten und (ii) die im analogen Fernsehsignal unterhalb der ausgewählten Frequenz und die doppelte Verstärkung aufweisenden Frequenzkomponenten umfaßt;

auf das gefilterte Ausgangssignal ansprechende Analog-Digital-Umsetzermittel (22) zur Erzeugung des gefilterten Ausgangssignals in digitaler Form;

auf das gefilterte Ausgangssignal ansprechende Verzögerungs- und Summationsmittel ($S_0$, 24, 26) zur Erzeugung eines digitalen summierten Ausgangssignals, das gleich der Summe des gefilterten Ausgangssignals und des zeitlich um ein Fernsehhalbbild verzögerten gefilterten Ausgangssignals ist, wodurch sich die außer Phase befindenden Hochfrequenzkomponenten wechselseitig auslöschen.

11. Verfahren zur Abtrennung von Luminanzinformation aus einem in analoger Form vorliegenden und sich aus Halbbildern zusammensetzenden Videosignal, in dem bestimmte hochfrequente Komponenten nicht Luminanzinformation definieren und von Halbbild zu Halbbild um 180° in der Phase verschoben sind, bei dem aus dem Videosignal durch Analogverarbeitung ein erstes Signal erzeugt wird, das aus hochfrequenten Komponenten des Videosignals oberhalb einer ausgewählten Frequenz besteht, dadurch gekennzeichnet, daß aus dem Videosignal durch Analogverarbeitung ein zweites Signal erzeugt wird, das es sowohl hochfrequente Komponenten des Videosignals als auch niederfrequente Komponenten unterhalb der ausgewählten Frequenz des Videosignals umfaßt;

das erste und zweite Signal in digitale Form umgesetzt werden;

die beiden digitalisierten Signale kombiniert werden; und

zwischen dem ersten und zweiten Signal vor deren Kombination eine Relativverzögerung eingeführt wird, derart, daß die miteinander kombinierten Signale das Videosignal in benachbarten Halbbildern repräsentieren, wodurch die außer Phase befindlichen hochfrequenten Komponenten wechselseitig ausgelöscht werden.

12. Verfahren nach Anspruch 11, bei dem die Verstärkung der verschiedenen Komponenten so beschaffen sind, daß die hochfrequenten Komponenten, die von Halbbild zu Halbbild in der Phase umgekehrt sind, durch die Kombination des ersten und zweiten Signals im wesentlichen entfernt werden, während die niederfrequenten Komponenten und diejenigen hochfrequenten Komponenten, welche von Halbbild zu Halbbild phasenkohärent sind, mit identischer Verstärkung durchgelassen werden.

13. Verfahren nach Anspruch 11 oder 12, bei dem das erste und zweite Signal in Bezug auf unterschiedliche benachbarte Halbbilder des Videosignals erzeugt werden und die Verzögerung so zur Einwirkung kommt, daß die beiden Signale in ihrer digitalisierten Form gleichzeitig zur Kombination zur Verfügung stehen.

14. Verfahren nach Anspruch 11 oder 12, bei dem das erste und zweite Signal in Bezug auf jedes Halbbild des Videosignals erzeugt werden und die Verzögerung einer Halbbildzeit entspricht.

15. Verfahren nach Anspruch 12 und 14, bei dem das erste und zweite Signal durch Tiefpaßfilterung des Videosignals erzeugt werden, um die niederfrequenten Komponenten zu gewinnen, die Differenz zwischen den niederfrequenten Komponenten und dem Videosignal gebildet wird, um das erste Signal zur erzeugen, und die Differenz zwischen dem Videosignal und einer phaseninvertierten Form der Niederfrequenzkomponente gebildet wird, um das zweite Signal zu erzeugen.

**Revendications**

1. Dispositif pour extraire une information de luminance d'un signal de télévision en couleur composite qui est constitué par des trames successives, dans lequel des composantes de chrominance de haute fréquence présentent un déphasage de 180° de trame en trame, comprenant une section de traitement analogique (12 ou 40-50), qui comprend un filtre (18 ou 40), capable de travailler sur le signal de télévision sous forme analogique pour produire un premier signal constitué par des composantes de haute fréquence du signal de télévision, caractérisé en ce que le filtre est également capable de produire un second signal constitué à la fois par des composantes de haute fréquence et des composantes de basse fréquence du signal de télévision, et caractérisé en outre par des moyens (22 ou 56, 58) pour convertir les premier et second signaux sous une forme codée de manière numérique, des moyens (26 ou 64) pour introduire entre les premier et second signaux un retard relatif correspondant à la période d'une trame, et des moyens (24 ou 66) pour combiner les signaux précités sous leur forme codée de manière numérique, le retard étant appliqué d'une manière telle que les signaux qui sont combinés proviennent de trames différentes, et les gains des composantes de haute fréquence étant les mêmes pour les premier et second signaux, et égaux à la moitié du gain des composantes de basse fréquence, grâce à quoi dans le signal de sortie des moyens

de sommation, les composantes de chrominance de haute fréquence déphasées s'annulent mutuellement et les composantes de luminance de haute fréquence et de basse fréquence égalisées sont conservées.

2. Dispositif selon la revendication 1, dans lequel, le filtre est un filtre passe-bas (18 ou 40) qui est conçu pour recevoir le signal de télévision analogique, et la section précitée comprend des moyens pour comparer et combiner effectivement le signal de sortie du filtre avec le signal de télévision analogique, pour produire les premier et second signaux précités.

3. Dispositif selon la revendication 1 ou la revendication 2, dans lequel la section précitée est conçue de façon à fournir continuellement les premier et second signaux, dans des canaux respectifs comprenant chacun un convertisseur analogique-numérique (56, 58).

4. Dispositif selon la revendication 3, dans lequel l'un des canaux comprend une mémoire de trame (64) pour produire le retard précité.

5. Dispositif selon l'une quelconque des revendications 1 à 4, dans lequel la section précitée est conçue de façon à produire consécutivement les premier et second signaux, les moyens destinés à introduire un retard (26) sont conçus pour enregistrer l'un des premier et second signaux pendant une première période de trame, et les moyens de combinaison ($S_0$, 24) peuvent fonctionner de façon à additionner au signal enregistré, l'autre signal parmi les premier et second signaux, pendant une seconde période de trame.

6. Dispositif selon la revendication 5, dans lequel la section précitée comprend un amplificateur de différence (20) qui est conçu pour recevoir le signal de télévision analogique et le signal de sortie du filtre passe-bas (18) constituant le filtre précité, et le filtre passe-bas peut être commuté pour recevoir respectivement pendant des périodes de trames consécutives, le signal de télévision analogique et une forme inversée de celui-ci.

7. Dispositif pour produire une information de luminance à partir d'un signal vidéo analogique constitué par des trames successives, dans lequel certaines composantes de haute fréquence sont déphasées de 180° de trame en trame,, caractérisé par:
des moyens de filtrage (40, 42) qui réagissent au signal vidéo analogique en produisant des premier et second signaux filtrés, de façon que le premier signal filtré (45) contienne les composantes de basse fréquence qui sont présentes dans le signal vidéo analogique, et que le second signal filtré (46) contienne les composantes de basse fréquence qui sont présentes dans le signal vidéo analogique, avec un déphasage de 180°;
des premiers moyens de sommation (48) qui réagissent au signal vidéo analogique et au premier signal filtré en produisant un premier signal de sortie (52) égal à la différence entre le signal vidéo analogique et le premier signal filtré;
des seconds moyens de sommation (50) qui réagissent au signal vidéo analogique et au second signal filtré en produisant un second signal de sortie (54) égal à la différence entre le signal vidéo analogique et le second signal filtré;
des premiers moyens de conversion (56) pour produire un premier signal numérisé (60) correspondant au premier signal de sortie;
des seconds moyens de conversion (58, 64) pour produire un second signal numérisé (62) correspondant au second signal de sortie;
des moyens de retard numériques (64) pour retarder de la période d'une trame le second signal numérisé; et
des moyens de sommation (66) pour produire l'information de luminance sous la forme de la somme du premier signal numérisé (60) et du second signal numérisé retardé (68).

8. Dispositif selon la revendication 7, dans lequel les moyens de filtrage comprennent:
un filtre passe-bas (40) qui réagit au signal vidéo analogique en produisant un signal de sortie filtré (44); et
des moyens amplificateurs (42) qui réagissent au signal de sortie filtré en produisant le premier signal filtré correspondant au signal filtré de sortie, et le second signal filtré déphasé de 180° par rapport au premier signal filtre.

9. Dispositif selon la revendication 7 ou la revendication 8, dans lequel les moyens de retard numériques (64) comprennent une mémoire de trame.

10. Dispositif pour produire une information de luminance à partir de deux trames de télévision adjacentes d'un signal vidéo analogique constitué par un ensemble de composantes de fréquence, comprenant des composantes de haute fréquence qui sont déphasées de 180° d'une trame à l'autre, caractérisé par:
des moyens de filtrage (16, $S_1$, 18, 20) qui réagissent aux première et seconde trames de télévision du signal vidéo analogique en produisant un signal de sortie filtré qui, pour l'une des trames, comprend seulement les composantes de fréquence qui sont présentes dans le signal vidéo analogique au-dessus d'une fréquence sélectionnée, et qui, pour l'autre trame, comprend: (i) les composantes de fréquence présentes dans le signal vidéo analogique au-dessus de la fréquence sélectionnée, avec le même gain que les composantes correspondantes dans le signal de sortie filtré pour la première trame, et (ii) les composantes de fréquence présentes dans le signal analogique au-dessous de la fréquence sélectionnée, avec un gain égal au double du gain précité;
des moyens de conversion analogique-numérique (22) qui réagissent au signal de sortie filtré en produisant le signal de sortie filtré avec un format numérique;
des moyens de retard et de sommation ($S_0$, 24, 26) qui réagissent au signal de sortie filtré en produisant un signal de sortie numérique sommé qui est égal à la somme du signal de sortie filtré et du signal de sortie filtré retardé d'une trame de télévision, grâce à quoi les composantes de haute fréquence déphasées s'annulent mutuellement.

11. Un procédé d'extraction d'une information de luminance à partir d'un signal vidéo qui est sous forme analogique et qui est constitué par des trames, dans lequel certaines des composantes de haute fréquence définissent une information autre qu'une information de luminance et sont déphasées de 180° d'une trame à une autre, le procédé comprenant la génération, à partir du signal vidéo, par un traitement analogique, d'un premier signal qui consiste en composantes de haute fréquence du signal vidéo supérieures à une fréquence sélectionnée; caractérisé par les opérations suivantes:

on produit à partir du signal vidéo, par un traitement analogique, un second signal qui comprend a fois des composantes de haute fréquence du signal vidéo et des composantes de basse fréquence du signal vidéo, inférieures à la fréquence sélectionnée;

on convertit sous forme numérique chacun des premier et second signaux;

on combine les deux signaux numérisés; et

on introduit un retard relatif entre les premier et second signaux, avant de les combiner, de façon que les signaux qui sont combinés représentent le signal vidéo dans des trames adjacentes, grâce à quoi les composantes de haute fréquence déphasées s'annulent mutuellement.

12. Un procédé selon la revendication 11, dans lequel les gains des diverses composantes sont tels que les composantes de haute fréquence dont la phase s'inverse de trame en trame sont pratiquement éliminées par la combinaison des premier et second signaux, tandis que les composantes de basse fréquence et les composantes de haute fréquence qui ont une phase cohérente de trame en trame, sont transmises avec un gain identique.

13. Un procédé selon la revendication 11 ou la revendication 12, dans lequel les premier et second signaux sont produits pour des trames différentes adjacentes du signal vidéo, et le retard est appliqué de façon à rendre les deux signaux simultanément disponibles pour la combinaison, sous leurs formes numérisées.

14. Un procédé selon la revendication 11 ou la revendication 12, dans lequel les premier et second signaux sont produits pour chaque trame du signal vidéo, et le retard correspond à une période de trame.

15. Un procédé selon la revendication 12 et la revendication 14, dans lequel les premier et second signaux sont produits en soumettant le signal vidéo à un filtrage passe-bas pour obtenir les composantes de basse fréquence, en formant la différence entre les composantes de basse fréquence et le signal vidéo, pour fournir le premier signal, et en formant la différence entre le signal vidéo et une forme à phase inversée des composantes de basse fréquence, pour fournir le second signal.

ANALOG
COMPOSITE
VIDEO
SIGNAL

FIG_1

gain

K

frequency

FIG_3

gain

2k

K

frequency

FIG_2

EP 0 124 280 B1

FIG 4